(19)

Europäisches
Patentamt
European
Patent Office
Office européen
des brevets

(11) **EP 4 397 942 A1**

(12) **EUROPEAN PATENT APPLICATION**
published in accordance with Art. 153(4) EPC

(43) Date of publication:
**10.07.2024 Bulletin 2024/28**

(21) Application number: **23825347.0**

(22) Date of filing: **16.01.2023**

(51) International Patent Classification (IPC):
***G01B 11/14*** (2006.01)    ***G06V 20/58*** (2022.01)
***G01S 13/93*** (2020.01)

(86) International application number:
**PCT/CN2023/072290**

(87) International publication number:
**WO 2024/108754 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 CN 202211496847**

(71) Applicant: **Huizhou Desay SV Automotive Co., Ltd.
Huizhou, Guangdong 516006 (CN)**

(72) Inventor: **LUO, Yongguan
Huizhou
Guangdong 516006 (CN)**

(74) Representative: **Chimini, Francesco
Jacobacci & Partners S.p.A.
Piazza della Vittoria 11
25122 Brescia (IT)**

(54) **OBSTACLE DISTANCE MEASUREMENT METHOD AND APPARATUS, AND VEHICLE AND MEDIUM**

(57)    Disclosed are an obstacle ranging method and device, a vehicle and a medium. The method includes that: when it is determined, according to a captured first driving image, that an obstacle exists in a driving direction of a vehicle, obstacle region information of the obstacle is determined; a light beam emission manner is determined according to a current vehicle speed and the obstacle region information; left and right side radio frequency mechanisms on the vehicle are controlled to emit a light beam in the light beam emission manner; a light spot focusing parameter of a light beam spot is adjusted in a light spot focusing manner matching the light beam emission manner, and a second driving image containing the adjusted light beam spot is obtained; and a spacing distance between the vehicle and the obstacle is determined according to the second driving image.

S110
When it is determined, according to a captured first driving image, that an obstacle exists in a driving direction of a vehicle, determine obstacle region information of the obstacle

S120
Determine a light beam emission manner according to a current vehicle speed and the obstacle region information

S130
Control left and right side radio frequency mechanisms on the vehicle to emit a light beam in the light beam emission manner

S140
Adjust a light spot focusing parameter of a light beam spot in a light spot focusing manner matching the light beam emission manner, and obtain a second driving image containing the adjusted light beam spot

**FIG. 1**

EP 4 397 942 A1

**Description**

The present application claims priority to Chinese Patent Application No. 202211496847.4, filed with the China National Intellectual Property Administration (CNIPA) on Nov. 25, 2022, the disclosure of which is incorporated herein by reference in its entirety.

TECHNICAL FIELD

The present application relates to the field of visual perception technologies, for example, to an obstacle ranging method and device, a vehicle and a medium.

BACKGROUND

With the development of highway traffic, especially expressway systems, the traffic accident rate has also shown a rising trend, and traffic safety has increasingly become a focus of people's attention. Therefore, the vehicle safety driver-assistance technology is researched to provide the safety driving assistance function for the vehicle, so that the intelligent technical service is provided for reducing the traffic accidents caused by the subjective factor of the driver.

In the related art, the pure visual perception technology is used for ranging, an obstacle in an image is identified according to a preset obstacle type, and a distance of the obstacle is determined according to the image, but the pure visual perception technology has the problem of not being able to achieve the intelligent tracking and accurate ranging. Therefore, an external apparatus such as an ultrasonic radar is required to be equipped in the related art, however, the external apparatus such as the ultrasonic radar cannot perform the intelligent tracking and accurate ranging based on the specific obstacle. Besides, the detection distance is limited.

SUMMARY

The present application provides an obstacle ranging method and device, a vehicle and a medium to achieve the distance measurement of the obstacle based on the pure vision.

According to a first aspect of the present application, an obstacle ranging method is provided. The method includes the following:

When it is determined, according to a captured first driving image, that an obstacle exists in a driving direction of a vehicle, obstacle region information of the obstacle is determined;

a light beam emission manner is determined according to the current vehicle speed and the obstacle region information;

left and right side radio frequency mechanisms on the vehicle are controlled to emit a light beam in the light beam emission manner;

a light spot focusing parameter of a light beam spot is adjusted in a light spot focusing manner matching the light beam emission manner, and a second driving image containing the adjusted light beam spot is obtained; and

a spacing distance between the vehicle and the obstacle is determined according to the second driving image.

The light beam spot is a light dropping point of the light beam in an emission direction of the light beam.

According to a second aspect of the present application, an obstacle ranging device is provided. The device includes an information determination module, a manner determination module, a light beam emission module, an image obtaining module and a distance determination module.

The information determination module is configured to determine obstacle region information of an obstacle when it is determined that the obstacle exists in a driving direction of a vehicle according to a captured first driving image.

The manner determination module is configured to determine a light beam emission manner according to a current vehicle speed and the obstacle region information.

The light beam emission module is configured to control left and right side radio frequency mechanisms on the vehicle to emit a light beam in the light beam emission manner.

The image obtaining module is configured to adjust a light spot focusing parameter of a light beam spot in a light spot focusing manner matching the light beam emission manner and obtain a second driving image containing the adjusted light beam spot.

The distance determination module is configured to determine a spacing distance between the vehicle and the obstacle according to the second driving image.

The light beam spot is a light dropping point of the light beam in an emission direction of the light beam.

According to a third aspect of the present application, a vehicle is provided.

The vehicle includes at least one controller, a radio frequency rotation member, a light spot focusing chip, and a memory communicatively connected to the at least one controller.

The radio frequency rotation member is connected to left and right side radio frequency mechanisms, and is configured to control a light beam emission manner of the left and right side radio frequency mechanisms.

The light spot focusing chip is configured to adjust a light spot focusing parameter of a light beam spot.

The memory stores a computer program executable by the at least one controller, and when the computer program is executed by the at least one controller, the at least one controller is enabled to perform the obstacle ranging method in any one of the embodiments of the present application.

According to another aspect of the present application, a computer-readable storage medium is provided. The computer-readable storage medium stores a computer instruction, and the computer instruction is configured to implement, when executed by a processor, the obstacle ranging method in any one of the embodiments of the present application.

BRIEF DESCRIPTION OF DRAWINGS

FIG. 1 is a flowchart of an obstacle ranging method according to embodiment one of the present application;

FIG. 2 is a flowchart of an obstacle ranging method according to embodiment two of the present application;

FIG. 3 is an example diagram of a first driving image in an obstacle ranging method according to embodiment two of the present application;

FIG. 4A is an example diagram illustrating the determination of a spacing distance according to a light beam spot area in an obstacle ranging method according to embodiment two of the present application;

FIG. 4B is an example diagram illustrating the determination of a spacing distance according to an angle in an obstacle ranging method according to embodiment two of the present application;

FIG. 5 is a schematic structural diagram of an obstacle ranging device according to embodiment three of the present application; and

FIG. 6 is a schematic structural diagram of a vehicle for implementing an obstacle ranging method according to an embodiment of the present application.

DETAILED DESCRIPTION

It should be noted that the terms "first", "second" and the like in the Description and claims of the present application, and in the foregoing drawings, are used for distinguishing between similar objects and not necessarily for describing a particular order or sequential order. It should be understood that the data so used are interchangeable as appropriate so that embodiments of the present application described herein may be implemented in an order other than those illustrated or described herein. Moreover, the terms "include" and "have" as well as any variations thereof, are intended to cover a non-exclusive inclusion, for example, a process, a method, a system, a product, or an apparatus that includes a series of steps or units is not necessarily limited to those steps or units expressly listed, but may include other steps or units not expressly listed or inherent to such process, method, product, or apparatus.

Embodiment one

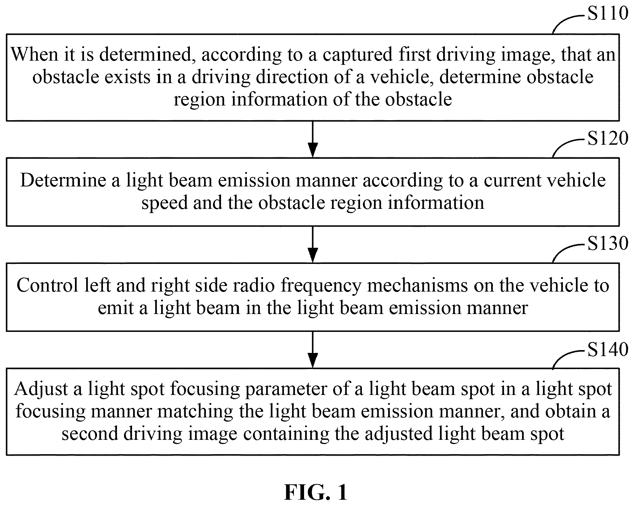

FIG. 1 is a flowchart of an obstacle ranging method according to embodiment one of the present application. This embodiment may be applied to the case of measuring a distance of an obstacle based on a pure vision. The method may be performed by an obstacle ranging device. The obstacle ranging device may be implemented in at least one of hardware or software. The obstacle ranging device may be configured in a vehicle. As shown in FIG. 1, the method includes the steps described below.

In S 110, when it is determined, according to a captured first driving image, that an obstacle exists in a driving direction of a vehicle, obstacle region information of the obstacle is determined.

In this embodiment, the first driving image may be understood as an image photographed by the front camera when the vehicle is driving. The driving direction of the vehicle may be understood as the direction corresponding to the vehicle driving. The obstacle may be understood as an object that is in the driving direction of the vehicle and may hinder the vehicle from traveling. The obstacle region information may be understood as image information obtained by marking a region in which the obstacle is located and contour information of the obstacle.

Exemplarily, a picture in the driving direction of the vehicle may be collected according to a camera equipped on the vehicle, and may be transmitted in the form of a video through a bus or the like. When an execution body receives the first driving image, the video may be decomposed into each frame of picture, and each frame of picture may be used as the first driving image captured by the camera. The first driving image is analyzed, when an object, such as an object having a height, different from environment features appears in the first driving image and blocks the driving direction, it may be understood that an obstacle exists in the driving direction, and the obstacle may be considered by default to have a ranging requirement. Thus, a range of the obstacle and the contour of the obstacle are marked in the first driving image, and the marked image is used as the obstacle region information of the obstacle.

In S 120, a light beam emission manner is determined according to a current vehicle speed and the obstacle region information.

In this embodiment, the current vehicle speed may be understood as the current driving speed of the vehicle. The light beam emission manner may be understood as different angles of light beam emission, where the light beam may be a light beam emitted by an infrared lamp, and the like. In this embodiment, the light beam emitted by the infrared lamp is only used as an example for the light beam, and the light beam is not limited in the present application.

Exemplarily, when the obstacle exists in the driving direction of the vehicle, a vehicle speed acquisition instruction may be sent to the corresponding sensor, and the current vehicle speed sent by the corresponding sensor may be received. The current vehicle speed may be compared with a preset speed threshold. When the current vehicle speed is less than or equal to the preset speed threshold, it may be considered that the vehicle speed is relatively slow, the obstacle may be a pedestrian and the like. If the light beam emission angle is too high, it may be irradiated on human eyes and cause harm to pedestrians, the light beam may be emitted to the contour of the obstacle on the ground and controlled to track the contour of the obstacle. When the current vehicle speed is greater than the preset speed threshold, it may be considered that the vehicle speed is relatively fast and the obstacle may be a vehicle, the light beam may be emitted at an included angle of 90° relative to the vehicle itself, that is, the light beam may be emitted parallel to the ground where the vehicle is located, so that the light beam may be irradiated on the surface of the obstacle, such as at the rear of the vehicle.

In S130, left and right side radio frequency mechanisms on the vehicle are controlled to emit a light beam in the light beam emission manner.

In this embodiment, the left and right side radio frequency mechanisms may be understood as mechanisms that emit the light beam, for example, the left and right side radio frequency mechanisms may be disposed on left and right side vehicle lamps.

It should be understood that the left and right side radio frequency mechanisms emit only the light beam and cannot adjust a light beam emission angle. In this case, a radio frequency rotation member needs to be added to control the left and right side radio frequency mechanisms to rotate.

Exemplarily, after the light beam emission manner is determined according to the current vehicle speed, the radio frequency rotation member may be controlled to rotate according to the light beam emission manner, a corresponding rotation angle instruction may be generated according to the light beam emission manner, and the rotation angle instruction is transmitted to the radio frequency rotation member so that the radio frequency rotation member rotates according to the corresponding angle and the left and right side radio frequency mechanisms are controlled to rotate to the corresponding angle to emit the light beam.

Exemplarily, the light beam emission manner may be emitting the light beam at an included angle of 90° relative to the vehicle itself. The radio frequency rotation member may be controlled to rotate the left and right side radio frequency mechanisms to an included angle of 90° with the ground so that light beams emitted by the left and right side radio frequency mechanisms may be irradiated on the surface of the obstacle. The light beam emission manner may be emitting the light beam on the left side at an included angle of 60° relative to the vehicle itself and emitting the light beam on the right side at an included angle of 30° relative to the vehicle itself. At this time, corresponding to the obstacle tilting to the right side, the radio frequency rotation member may be controlled to rotate the left side radio frequency mechanism to the included angle of 60° relative to the ground, and the radio frequency rotation member may be controlled to rotate the right side radio frequency mechanism to the included angle of 30° relative to the ground, so that the light beams emitted by the left and right side radio frequency mechanisms may be irradiated onto the contour of the obstacle on the ground.

In S140, a light spot focusing parameter of a light beam spot is adjusted in a light spot focusing manner matching the light beam emission manner, and a second driving image containing the adjusted light beam spot is obtained.

In this embodiment, the light spot focusing manner may be understood as an adjustment manner of the light spot focusing parameter. The light beam spot is a light dropping point of the light beam in the emission direction of the light beam, that is, a spot presented when the light beam encounters the obstacle in the emission direction. The light spot focusing parameter may be understood as a parameter used for adjusting the light beam intensity and size. The second driving image may be understood as an image captured after the light spot focusing parameter of the light beam spot is adjusted.

It should be understood that the left and right side radio frequency mechanisms only emit the light beam, and cannot adjust the light spot focusing parameter of the light beam. Therefore, a light spot focusing chip needs to be added to adjust the light spot focusing parameter of the light beam spot.

Exemplarily, when the light beam emission manner is emitting the light beam at an included angle of 90° with the vehicle itself, the light spot focusing parameter may be adjusted according to the clarity of the light beam spot in the driving image, so that the light beam spot may be kept clearly displayed in the driving image, such as in the form of a preset gear, and each gear corresponds to a different light spot focusing parameter. Based on the clarity of the current light beam spot or the roughly calculated distance from the obstacle, a matching gear may be found, the light spot focusing parameter is adjusted to the corresponding gear through the light spot focusing chip, that is, the light spot focusing parameter of the light beam spot may be adjusted to a target focusing parameter. When the light beam emission manner is to emit the light beam onto the contour of the obstacle on the ground and control the light beam to track the contour of the obstacle, the light spot focusing parameter may be adjusted through the light spot focusing chip in a form of a preset threshold. At this time, there is no requirement for the clarity of the driving image, only the existence of the light beam spot in the driving image needs to be ensured. Therefore, when no light beam spot exists in the driving image, the obstacle may be too far away, the parameter may be adjusted again through the light spot focusing chip. After the adjustment is completed, a second driving image that contains the adjusted light beam spot and is captured by the camera may be obtained.

In S150, a spacing distance between the vehicle and the obstacle is determined according to the second driving image.

In this embodiment, the spacing distance may be understood as a distance between the vehicle and the closest position of the obstacle to the vehicle.

Exemplarily, when the vehicle speed is greater than the preset threshold, a size detection instruction may be sent to a preset light spot size detection unit. In this case, the light spot size detection unit may detect the light spot area in the second driving image periodically, light spot areas of two light spots on the left and right sides are acquired, and the light spot areas and the corresponding parameter are put into a preset first spacing distance formula to calculate a spacing distance between the vehicle and the obstacle. When the vehicle speed is less than or equal to the preset threshold, an angle detection instruction may be sent to a preset angle detection unit. In this case, the angle detection unit may detect the included angle between the left and right side radio frequency mechanisms and the vehicle periodically, and the included angle value and predetermined setting heights of the left and right side radio frequency mechanisms are put into a preset second spacing distance formula to calculate the spacing distance between the vehicle and the obstacle. The spacing distance may be sent to a corresponding display screen in the vehicle for displaying the spacing distance. For example, the spacing distance between the vehicle and the obstacle may be marked on left and right side auxiliary lines through the screen corresponding to the central control in the form of left and right side auxiliary lines (such as the left and right side auxiliary lines in the reversing image), so that the driver may see the spacing distance intuitively.

Exemplarily, when the obstacle is in an inclined state relative to the vehicle, the corresponding left and right side light spot areas are different, or the corresponding angles of the left and right side radio frequency mechanisms are different, then spacing distances on the left and right sides are different. A side with the closest spacing distance may be used as the spacing distance between the obstacle and the vehicle, alternatively, two spacing distances of the left and right sides of the vehicle relative to the obstacle may also be displayed simultaneously.

According to the obstacle ranging method provided in embodiment one, when it is determined, according to the captured first driving image, that the obstacle exists in the driving direction of the vehicle, the obstacle region information of the obstacle is determined; the light beam emission manner is determined according to the current vehicle speed and the obstacle region information; the left and right side radio frequency mechanisms on the vehicle are controlled to emit the light beam in the light beam emission manner; the light spot focusing parameter of the light beam spot is adjusted in the light spot focusing manner matching the light beam emission manner, and the second driving image containing the adjusted light beam spot is obtained; and the spacing distance between the vehicle and the obstacle is determined according to the second driving image. By means of the method, the light beam is emitted in the light beam emission manner and the light spot focusing manner which match the obstacle region information and the vehicle speed, the image containing the light beam spot is analyzed, and the spacing distance is determined. The intelligent tracking and accurate ranging of the obstacle are achieved based on the visual perception, and compared with the radar ranging method, the hardware architecture cost is reduced.

Embodiment two

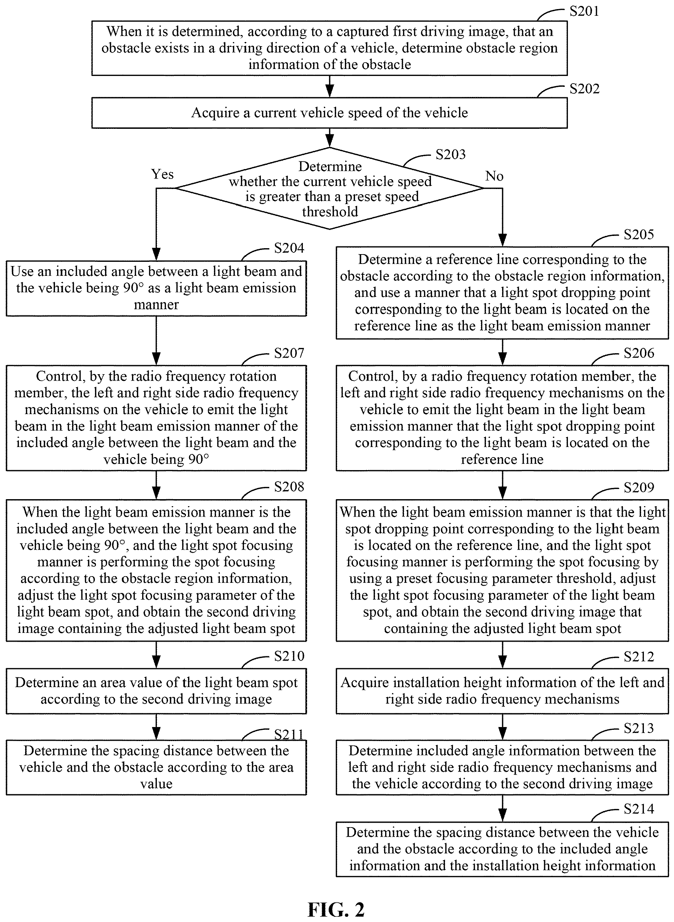

FIG. 2 is a flowchart of an obstacle ranging method according to embodiment two of the present application. This embodiment is optimized based on the above-described embodiment. As shown in FIG. 2, the method includes the following steps.

In S201, when it is determined, according to a captured first driving image, that an obstacle exists in a driving direction of a vehicle, obstacle region information of the obstacle is determined.

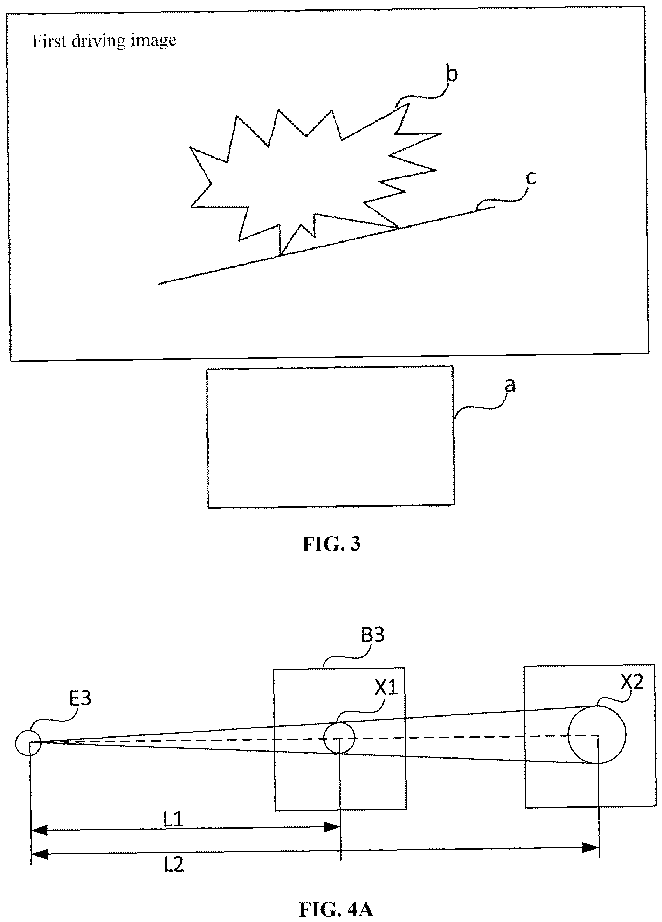

For ease of understanding, the obstacle region information in the first driving image is illustrated. FIG. 3 is an example diagram of a first driving image in the obstacle ranging method according to embodiment two of the present application, where a represents the vehicle, b represents the obstacle, and c represents a reference line. The obstacle region information of the obstacle may be determined according to the first driving image.

As shown in FIG. 3, an upper layer is the first driving image captured by a camera, the image includes an irregularly shaped obstacle b with calibrated contours and a reference line c obtained by connecting two points of the irregular obstacle which are closest to the vehicle a, so that the obstacle region information is obtained.

In S202, a current vehicle speed of the vehicle is acquired.

Exemplarily, when the obstacle exists in the driving direction of the vehicle, a vehicle speed acquisition instruction may be sent to the corresponding sensor, and the current vehicle speed sent by the corresponding sensor may be received.

In S203, whether the current vehicle speed is greater than a preset speed threshold is determined.

In this embodiment, the speed threshold may be understood as a threshold for determining whether the vehicle speed is too fast.

Exemplarily, the speed threshold may be preset. When the current vehicle speed sent by the sensor is received, the current vehicle speed may be compared with the preset speed threshold to determine whether the current vehicle speed is greater than the preset speed threshold.

In S204, if the current vehicle speed is greater than the preset speed threshold, an included angle of 90° between the light beam and the vehicle is used as a light beam emission manner.

Exemplarily, when the current vehicle speed is greater than the preset speed threshold, it may be considered that the vehicle speed is relatively fast, and the obstacle may be a vehicle, then the light beam may be emitted in the included angle of 90° relative to the vehicle itself, that is, the light beam is emitted parallel to the ground where the vehicle is located, so that the light beam may be irradiated to the surface of the obstacle, for example, to the vehicle tail.

In S205, if the current vehicle speed is less than or equal to a preset speed threshold, a reference line corresponding to the obstacle is determined according to the obstacle region information, and a manner that a light spot dropping point corresponding to the light beam is located on the reference line is used as the light beam emission manner.

In this embodiment, the light spot dropping spot may be understood as a dropping point when the light spot is irradiated on the ground in the direction vertical to the vehicle head. The reference line may be understood as a straight line for identifying the contour of the obstacle projected on the ground.

Exemplarily, if a region, where the obstacle is located, closest to the vehicle is identified as one straight line (namely, the shape of the obstacle is relatively regular) in the obstacle region information, this straight line is used as the reference line; if a region, where the obstacle is located, closest to the vehicle is identified as dispersed points (that is, the shape of the obstacle is irregular) in the obstacle region information, a tangent line of the obstacle region may be identified and used as the reference line, for example, two dispersed points closest to the vehicle among the dispersed points are found and connected to obtain the tangent line. The left and right side radio frequency mechanisms each have one light spot dropping point in the direction perpendicular to the vehicle head, and angles of the left and right side radio frequency mechanisms may be adjusted so that the two light spot dropping points may be on the straight line.

In S206, the left and right side radio frequency mechanisms on the vehicle are controlled by a radio frequency rotation member to emit the light beam in the light beam emission manner that the light spot dropping point corresponding to the light beam is located on the reference line.

The radio frequency rotation member is connected to the left and right side radio frequency mechanisms.

Exemplarily, after the light beam emission manner is determined according to the current vehicle speed, the radio frequency rotation member may be controlled to rotate according to the light beam emission manner, the corresponding rotation angle instruction may be generated according to the light beam emission manner, and the rotation angle instruction is transmitted to the radio frequency rotation member so that the radio frequency rotation member rotates according to the corresponding angle and the left and right side radio frequency mechanisms are controlled to rotate to the corresponding angle to emit the light beam.

In S207, the left and right side radio frequency mechanisms on the vehicle are controlled by the radio frequency rotation member to emit the light beam in the light beam emission manner of the included angle between the light beam and the vehicle being 90°.

Exemplarily, after the light beam emission manner is determined according to the current vehicle speed, the radio frequency rotation member may be controlled to rotate according to the light beam emission manner, a rotation angle instruction corresponding to 90° may be generated according to the light beam emission manner, and the rotation angle instruction is transmitted to the radio frequency rotation member so that the radio frequency rotation member rotates according to the corresponding angle and the left and right side radio frequency mechanisms are controlled to rotate to 90° for emitting the light beam.

In S208, when the light beam emission manner is the included angle between the light beam and the vehicle being 90°, the light spot focusing manner is performing the light spot focusing according to the obstacle region information, the light spot focusing parameter of the light beam spot is adjusted, and the second driving image containing the adjusted light beam spot is obtained.

Exemplarily, when the light beam emission manner is emitting the light beam at the included angle of 90° relative to the vehicle itself, the light spot focusing parameter may be adjusted according to the clarity of the light beam spot in the obstacle region information so that the light beam spot may be kept clearly displayed in the driving image, for example, the light spot focusing parameter may be adjusted in a form of a preset gear, and each gear corresponds to different light spot focusing parameters. Based on the clarity of the current light beam spot or the roughly calculated distance from the obstacle, a matching gear may be found, the light spot focusing parameter may be adjusted to the corresponding gear through the light spot focusing chip, that is, the light spot focusing parameter of the light beam spot may be adjusted to a target focusing parameter. After the adjustment is completed, the second driving image containing the adjusted light beam spot and captured by the camera may be obtained.

Exemplarily, the step in which the light spot focusing parameter of the light beam spot is adjusted and the second driving image containing the adjusted light beam spot is obtained may include the steps described below.

In a1, spot clarity of the light beam spot in the obstacle region information is extracted.

In this embodiment, the spot clarity may be understood as the degree of clarity when the light beam spot is displayed in the driving image.

Exemplarily, in a camera collection process, the obstacle region information in each frame may be acquired in real time. The obstacle region information may include the light beam spot, and the spot clarity of the light beam spot may be identified according to a preset method.

In b 1, when the spot clarity does not satisfy a preset first spot clarity standard, the light spot focusing parameter is adjusted through the light spot focusing chip.

In this embodiment, the first spot clarity standard may be understood as a standard that the spot clarity needs to be achieved.

Exemplarily, the spot clarity may be compared with a preset first spot clarity standard. When the spot clarity does not satisfy the preset first spot clarity standard, for example, each gear corresponds to a different light spot focusing parameter in the form of a preset gear, a difference value between the current spot clarity and the first spot clarity standard or the roughly calculated distance from the obstacle is calculated to determine a gear where the difference value or the distance is located, and the light spot focusing parameter is adjusted to the corresponding gear through the light spot focusing chip, that is, the light spot focusing parameter of the light beam spot is adjusted so that the light beam spot may be clearly displayed in the driving image.

In c1, the captured second driving image containing the adjusted light beam spot is obtained.

Exemplarily, after the adjustment is completed, the second driving image that contains the adjusted light beam spot and is captured by the camera may be obtained.

In S209, when the light beam emission manner is that the light spot dropping point corresponding to the light beam is located on the reference line, the light spot focusing manner is performing the spot focusing by using a preset focusing parameter threshold, and the light spot focusing parameter of the light beam spot is adjusted, and the second driving image containing the adjusted light beam spot is obtained.

In this embodiment, the focusing parameter threshold may be understood as a parameter value that enables the light beam spot to be displayed.

Exemplarily, when the light beam emission manner is that the light spot dropping point corresponding to the light beam is located on the reference line, the light spot focusing manner is adjusting the light spot focusing parameter through the light spot focusing chip in the form of a preset threshold. At this time, there is no requirement for the clarity of the driving image, and only the existence of the light beam spot in the driving image needs to be ensured. After the adjustment is completed, the second driving image that contains the adjusted light beam spot and is captured by the camera may be obtained.

In a2, spot clarity of the light beam spot in the obstacle region information is extracted.

In b2, the light spot focusing parameter is adjusted through the light spot focusing chip based on the focusing parameter threshold.

Exemplarily, a preset focusing parameter threshold may be acquired, and the light spot focusing parameter is adjusted to the focusing parameter threshold through the light spot focusing chip.

In c2, when the spot clarity does not satisfy the preset second spot clarity standard, a secondary adjustment is performed on the light spot focusing parameter by using the light spot focusing chip.

In this embodiment, the second spot clarity standard may be understood as a standard that the spot clarity needs to be achieved. The second spot clarity standard is different from the first spot clarity standard.

Exemplarily, when the light beam emission manner is that the light spot dropping point corresponding to the light beam is located on the reference line, there is no requirement for the clarity of the driving image at this time, only the existence of the light beam spot in the driving image needs to be ensured, then the second spot clarity standard may be lower than the first spot clarity standard. When the spot clarity does not satisfy the preset first spot clarity standard, for example, when no light beam spot exists in the driving image, that is, the obstacle may be too far, the parameter may be adjusted again through the light spot focusing chip. For example, each gear corresponds to a different light spot focusing parameter in the form of a preset gear, a difference value between the current spot clarity and the second spot clarity standard or the roughly calculated distance from the obstacle may be calculated to determine a gear where the difference value or the distance is located, and the light spot focusing parameter is adjusted to the corresponding gear through the light spot focusing chip, that is, the light spot focusing parameter of the light beam spot is adjusted so that the light beam spot may be clearly displayed in the driving image.

In d2, the captured second driving image containing the adjusted light beam spot is obtained.

Exemplarily, after the adjustment is completed, the second driving image that is captured by the camera and contains the adjusted light beam spot may be obtained.

In S210, an area value of the light beam spot is determined according to the second driving image.

In this embodiment, the area value may be understood as an area value displayed by the light beam spot in the image.

Exemplarily, a light spot area detection unit may be preset to identify two light beam spots on the left and right sides of the second driving image, and areas of the two light beam spots are detected to obtain area values of the two light beam spots on the left and right side.

In S211, the spacing distance between the vehicle and the obstacle is determined according to the area value.

Exemplarily, a relationship coefficient of an area value corresponding to the spacing distance may be set in advance according to the light spot focusing parameter, a corresponding relationship table between the light spot focusing parameter and the relationship coefficient may be established, the relationship coefficient may be determined according to the current light spot focusing parameter, and the spacing distance between the vehicle and the obstacle may be determined according to the product of the relationship coefficient and the area value.

Exemplarily, the spacing distance may be calculated by using the following formula:

$$L = kX$$

L is the spacing distance between the vehicle and the obstacle, k is the relationship coefficient, and X is the area value of the light beam spot.

In S212, installation height information of the left and right side radio frequency mechanisms is acquired.

In this embodiment, the installation height information may be understood as distances between the left and right side radio frequency mechanisms and the ground.

Exemplarily, when the left and right side radio frequency mechanisms are installed, the installation height information of the left and right side radio frequency mechanisms may be determined through measurement, the installation height information may be input into a memory for storage, and the installation height information of the left and right side radio frequency mechanisms may be acquired through a lookup in the memory.

In S213, included angle information between the left and right side radio frequency mechanisms and the vehicle is determined according to the second driving image.

Exemplarily, rotation angles of the left and right side radio frequency mechanisms may be respectively detected through a pre-set rotation angle detection unit, so as to determine the included angle information between the left and right side radio frequency mechanisms and the vehicle.

In S214, the spacing distance between the vehicle and the obstacle is determined according to the included angle information and the installation height information.

Exemplarily, the included angle information and the installation height information may be put into a triangle function formula to determine the spacing distance between the vehicle and the obstacle.

Exemplarily, the spacing distance may be calculated by using the following formula:

$$L = H\tan\alpha$$

L represents the spacing distance between the vehicle and the obstacle, H is an installation height value, and $\alpha$ is an included angle between the radio frequency mechanism and the vehicle.

According to the obstacle ranging method provided in embodiment two, the region where the obstacle is located is identified to obtain the obstacle region information, and the light beam emission manner is determined according to a comparison result of the current vehicle speed and the speed threshold in combination with the obstacle region information, the left and right radio frequency mechanisms are controlled to rotate through the radio frequency rotation member according to the rotation angle in the light beam emission manner, so that the light beam dropping point may always fall on the reference line corresponding to the obstacle region, and the focusing parameter is adjusted through the light spot focusing chip, so that the light beam spot may be clearly displayed in the driving image, achieving the real-time tracking of the obstacle. According to the driving image containing the light beam spot and collected by the camera, the area value or the included angle information of the light beam spot may be determined, the area value and the included angle information are put into the corresponding spacing distance calculation formula, and the spacing distance between the vehicle and the obstacle is determined. On the basis of the hardware architecture of the visual perception related technology, the hardware architecture of radar ranging and integration is deleted, so that the resource and cost are saved, the accurate obstacle ranging may be achieved merely by additionally building the hardware architecture of the light spot focusing chip and the radio frequency rotation member, a complete set of implementation schemes for pure visual accurate ranging is provided, and the cost can also be controlled.

For ease of understanding, when the current vehicle speed is greater than the preset speed threshold, a method for calculating the spacing distance according to the light beam spot area is illustrated in a diagram, and when the current vehicle speed is less than or equal to the preset speed threshold, a method for calculating the spacing distance according to the angle is illustrated in a diagram.

FIG. 4A is an example diagram illustrating the determination of a spacing distance according to a light beam spot area in the obstacle ranging method according to embodiment two of the present application.

As shown in FIG. 4A, for ease of description, a single-side radio frequency mechanism is used as an example to determine spacing distances between the same obstacle and the vehicle at different moments, E3 is the radio frequency mechanism on one side, B3 is an obstacle, X1 is an area of the light beam spot of the obstacle B3 at the previous moment, X2 is an area of the light beam spot of the obstacle B3 at the current moment, L1 is a spacing distance between the obstacle B3 and the radio frequency mechanism at the previous moment, and L2 is a spacing distance between the obstacle B3 and the radio frequency mechanism at the current moment. When the current vehicle speed is greater than the preset speed threshold, the radio frequency rotation member may be controlled to adjust the radio frequency mechanism E3 to 90°, that is, the light beam is emitted parallel to the ground. When the light beam is irradiated on the obstacle B3, the light beam spot is formed. The light spot focusing parameter is adjusted by using the light spot focusing chip, and the area of the light beam spot is detected to obtain X1 and X2. The corresponding relationship coefficient k may be determined according to the light spot focusing parameter, and the spacing distance L1 and L2 may be determined by putting k, X1 and X2 into the formula of $L = kX$.

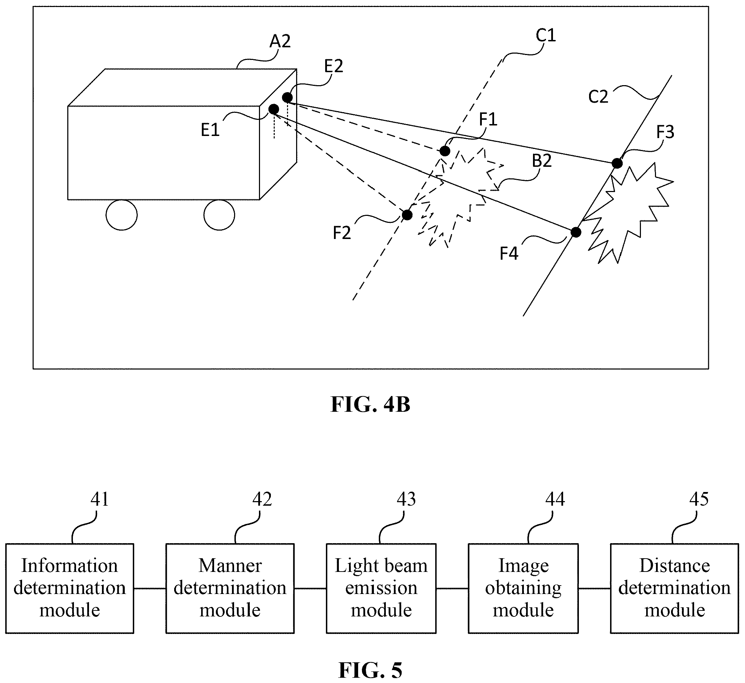

FIG. 4B is an example diagram illustrating the determination of a spacing distance according to an angle in the obstacle ranging method according to embodiment two of the present application.

As shown in FIG. 4B, for ease of description, spacing distances between the same obstacle and the vehicle at different moments are determined, A2 represents the vehicle itself, E1 represents the left side radio frequency mechanism, E2 represents the right side radio frequency mechanism, F 1 represents a right-side light beam dropping point at the previous moment, F2 represents a left-side light beam dropping point at the previous moment, B2 represents an obstacle, C1 represents a reference line at the previous moment, C2 represents the current reference line, F3 represents a right-side light beam dropping point at the current moment, and F4 represents a left-side light beam dropping point at the current moment. The reference line may be determined according to the obstacle region information, and E1 and E2 may be controlled to rotate through the radio frequency rotation member so that the light beam dropping points always drop on the reference line. In this case, a connection line between E1 and F2 may be considered as a light beam emitted by the left side radio frequency mechanism at the previous moment, and a rotation angle of the left side radio frequency mechanism may be detected, that is, an included angle value $\alpha 1$ between the light beam and the plane (the dotted line below E1 in the figure as the reference) on which E1 is located may be determined, and an installation height value H1 (that is, a distance from E1 to the ground) of E1 and the included angle value $\alpha 1$ are put into the formula of $L = H\tan\alpha$, so that the distance between the left side radio frequency mechanism and the obstacle at the previous moment may be calculated. Similarly, the distance between the right side radio frequency mechanism and the obstacle at the previous moment and the distance between the left and right side radio frequency mechanisms and the obstacle at the current moment may be calculated in the same manner, which will not be repeated.

Embodiment three

FIG. 5 is a schematic structural diagram of an obstacle ranging device according to embodiment three of the present application. As shown in FIG. 5, the device includes an information determination module 41, a manner determination module 42, a light beam emission module 43, an image obtaining module 44 and a distance determination module 45.

The information determination module 41 is configured to determine obstacle region information of an obstacle, when it is determined that the obstacle exists in a driving direction of a vehicle according to a captured first driving image.

The manner determination module 42 is configured to determine a light beam emission manner according to a current vehicle speed and the obstacle region information.

The light beam emission module 43 is configured to control left and right side radio frequency mechanisms on the vehicle to emit a light beam in the light beam emission manner.

The image obtaining module 44 is configured to adjust a light spot focusing parameter of a light beam spot in a light spot focusing manner matching the light beam emission manner and obtain a second driving image containing the adjusted light beam spot.

The distance determination module 45 is configured to determine a spacing distance between the vehicle and the obstacle according to the second driving image.

The light beam spot is a light dropping point of the light beam in an emission direction of the light beam.

According to the obstacle ranging device provided in embodiment three, the light beam is emitted in the light beam emission manner matching the obstacle region information and the vehicle speed and the light spot focusing manner, the image containing the light beam spot is analyzed, and the spacing distance is determined. The intelligent tracking and accurate ranging of the obstacle are achieved based on the visual perception, and compared with the radar ranging method, the hardware architecture cost is reduced.

In an embodiment, the manner determination module 42 is configured to:

acquire the current vehicle speed of the vehicle; in a case where the current vehicle speed is greater than a preset speed threshold, use a manner that an included angle between the light beam and the vehicle is 90° as the light beam emission manner; otherwise, determine a reference line corresponding to the obstacle according to the obstacle region information, and use a manner that a light spot dropping point corresponding to the light beam is located on the reference line as the light beam emission manner.

In an embodiment, the light beam emission module 43 is configured to:
control, by a radio frequency rotation member, the left and right side radio frequency mechanisms on the vehicle to emit the light beam in the light beam emission manner.

The radio frequency rotation member is connected to the left and right side radio frequency mechanisms.

In an embodiment, when the light spot focusing manner is performing light spot focusing according to the obstacle region information, the image obtaining module 44 is configured to: extract spot clarity of the light beam spot in the obstacle region information; when the spot clarity does not satisfy a preset first spot clarity standard, adjust the light spot focusing parameter through a light spot focusing chip; and obtain the captured second driving image containing the adjusted light beam spot.

In an embodiment, when the light spot focusing manner is performing the light spot focusing by using a preset focusing parameter threshold, the image obtaining module 44 is configured to: extract spot clarity of the light beam spot in the obstacle region information; adjust the light spot focusing parameter through a light spot focusing chip based on the focusing parameter threshold; when the spot clarity does not satisfy a preset second spot clarity standard, perform a secondary adjustment on the light spot focusing parameter through the light spot focusing chip; and obtain the captured second driving image containing the adjusted light beam spot.

In an embodiment, the distance determination module 45 is configured to determine an area value of the light beam spot according to the second driving image and determine the spacing distance between the vehicle and the obstacle according to the area value.

Alternatively, the distance determination module 45 may be further configured to:
acquire installation height information of the left and right side radio frequency mechanisms; determine included angle information between the left and right side radio frequency mechanisms and the vehicle according to the second driving image; and determine the spacing distance between the vehicle and the obstacle according to the included angle information and the installation height information.

The obstacle ranging device provided in the preceding embodiment of the present application may execute the obstacle ranging method provided in any embodiment of the present application, and has corresponding function modules and beneficial effects for executing the method.

Embodiment four

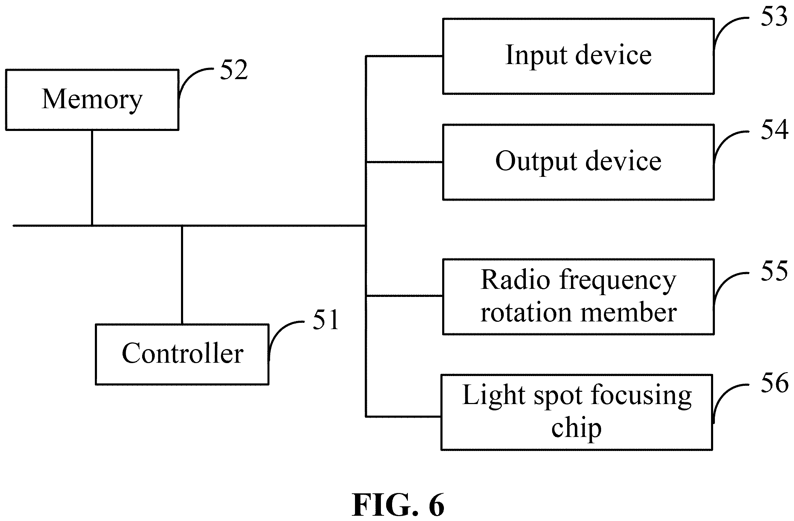

FIG. 6 is a schematic structural diagram of a vehicle according to embodiment four of the present application. As shown in FIG. 6, the vehicle includes a controller 51, a memory 52, an input device 53, an output device 54, a radio frequency rotation member 55, and a light spot focusing chip 56. There may be at least one controller 51 in the vehicle. In FIG. 5, one controller 51 is used as an example. The controller 51, the memory 52, the input device 53, the output device 54, the radio frequency rotation member 55, and the light spot focusing chip 56 in the vehicle may be connected by using a bus or in other manners, and the connection through a bus is used as an example in FIG. 5.

The memory 52 serves as a computer-readable storage medium and may be configured to store a software program, a computer-executable program and a module, such as a program instruction/module corresponding to the obstacle ranging method in the embodiments of the present application (for example, the information determination module 41, the manner determination module 42, the light beam emission module 43, the image obtaining module 44, and the distance determination module 45 in the obstacle ranging device). The controller 51 executes various functional applications and data processing of the vehicle by running software programs, instructions, and modules stored in the memory 52, that is, implements the obstacle ranging method described above.

The memory 52 may mainly include a storage program region and a storage data region, where the storage program region may store an operating system, and an application program required for at least one function, and the storage data region may store data and the like created according to the use of the terminal. Moreover, the memory 52 may include a high-speed random access memory and may also include a non-volatile memory, such as at least one magnetic disk storage device, flash memory device, or other non-volatile solid-state memory devices. In some instances, the memory 52 may include a memory remotely disposed with respect to the controller 51, and the remote memory may be connected to the vehicle over a network. Instances of such networks include, but are not limited to, the Internet, an intranet, a local area network, a mobile communication network, and combinations thereof.

The input device 53 may be configured to receive input numeric or character information and generate a key signal input related to user setting and function control of the cloud platform. The output device 54 may include a display apparatus such as a display screen.

The radio frequency rotation member 54 is connected to the left and right side radio frequency mechanisms, and may be configured to control a light beam emission manner of the left and right side radio frequency mechanisms.

The light spot focusing chip 55 may be configured to adjust a light spot focusing parameter of a light beam spot.

Embodiment five

Embodiment five of the present application further provides a storage medium including a computer-executable instruction. The computer-executable instruction is configured to perform, when executed by a computer processor, an obstacle ranging method. The method includes the following:

When it is determined, according to a captured first driving image, that an obstacle exists in a driving direction of a vehicle, obstacle region information of the obstacle is determined;

a light beam emission manner is determined according to a current vehicle speed and the obstacle region information;

left and right side radio frequency mechanisms on the vehicle are controlled to emit a light beam in the light beam emission manner;

a light spot focusing parameter of a light beam spot is adjusted in a light spot focusing manner matching the light beam emission manner, and a second driving image containing the adjusted light beam spot is obtained; and

a spacing distance between the vehicle and the obstacle is determined according to the second driving image.

The light beam spot is a light dropping point of the light beam in an emission direction of the light beam.
Of course, in the storage medium including the computer-executable instruction provided in the embodiment of the present application, the computer-executable instruction is not limited to the method operations described above, but may also perform related operations in the obstacle ranging method provided in any embodiment of the present application.
Through the description of the above implementations, those skilled in the art may clearly understand that the present application may be implemented by means of software and necessary universal hardware, and of course, the present application may also be implemented by hardware, but in many cases, the former is a better implementation. Based on this understanding, the technical schemes of the present application, either essentially or in terms of contributions to the related art, may be embodied in the form of a software product, and the computer software product may be stored in a computer-readable storage medium, such as a floppy disk of a computer, a read-only memory (ROM), a random access memory (RAM), a flash memory, a hard disk or an optional disk, and may include several instructions for enabling a computer device (which may be a personal computer, a server, a network device, or the like) to perform the method described in the embodiments of the present application.
It is worth noting that multiple units and modules included in the above-described embodiments of the obstacle ranging device are only divided according to the function logic and are not limited to the above division, as long as the corresponding functions may be achieved; in addition, the name of each function unit is also merely to facilitate distinguishing from each other and is not intended to limit the scope of protection of the present application.

## Claims

1. An obstacle ranging method, comprising:

   determining obstacle region information of an obstacle, when it is determined that the obstacle exists in a driving direction of a vehicle according to a captured first driving image;
   determining a light beam emission manner according to a current vehicle speed and the obstacle region information;
   controlling left and right side radio frequency mechanisms on the vehicle to emit a light beam in the light beam emission manner;
   adjusting a light spot focusing parameter of a light beam spot in a light spot focusing manner matching the light beam emission manner, and obtaining a second driving image containing the adjusted light beam spot; and
   determining a spacing distance between the vehicle and the obstacle according to the second driving image;
   wherein the light beam spot is a light dropping point of the light beam in an emission direction of the light beam.

2. The method of claim 1, wherein determining the light beam emission manner according to the current vehicle speed and the obstacle region information comprises:

   acquiring the current vehicle speed of the vehicle;
   in a case where the current vehicle speed is greater than a preset speed threshold, using a manner that an included angle between the light beam and the vehicle is 90° as the light beam emission manner; or
   in a case where the current vehicle speed is less than or equal to a preset speed threshold, determining a reference line corresponding to the obstacle according to the obstacle region information, and using a manner that a light spot dropping point corresponding to the light beam is located on the reference line as the light beam emission manner.

3. The method of claim 1, wherein controlling the left and right side radio frequency mechanisms on the vehicle to emit the light beam in the light beam emission manner comprises:

controlling, by a radio frequency rotation member, the left and right side radio frequency mechanisms on the vehicle to emit the light beam in the light beam emission manner;
wherein the radio frequency rotation member is connected to the left and right side radio frequency mechanisms.

4. The method of claim 2, wherein when the light beam emission manner is the manner that the included angle between the light beam and the vehicle is 90°, the light spot focusing manner is performing light spot focusing according to the obstacle region information; and
when the light beam emission manner is the manner that the light spot dropping point corresponding to the light beam is located on the reference line, the light spot focusing manner is performing the light spot focusing by using a preset focusing parameter threshold.

5. The method of claim 4, wherein when the light spot focusing manner is performing the light spot focusing according to the obstacle region information, adjusting the light spot focusing parameter of the light beam spot and obtaining the second driving image containing the adjusted light beam spot comprises:

extracting spot clarity of the light beam spot in the obstacle region information;
when the spot clarity does not satisfy a preset first spot clarity standard, adjusting the light spot focusing parameter through a light spot focusing chip; and
obtaining the captured second driving image containing the adjusted light beam spot.

6. The method of claim 4, wherein when the light spot focusing manner is performing the light spot focusing by using the preset focusing parameter threshold, adjusting the light spot focusing parameter of the light beam spot and obtaining the second driving image containing the adjusted light beam spot comprises:

extracting spot clarity of the light beam spot in the obstacle region information;
adjusting, through a light spot focusing chip, the light spot focusing parameter based on the focusing parameter threshold;
when the spot clarity does not satisfy a preset second spot clarity standard, performing a secondary adjustment on the light spot focusing parameter through the light spot focusing chip; and
obtaining the captured second driving image containing the adjusted light beam spot.

7. The method of claim 5, wherein determining the spacing distance between the vehicle and the obstacle according to the second driving image comprises:

determining an area value of the light beam spot according to the second driving image; and
determining the spacing distance between the vehicle and the obstacle according to the area value.

8. The method of claim 6, wherein determining the spacing distance between the vehicle and the obstacle according to the second driving image comprises:

acquiring installation height information of the left and right side radio frequency mechanisms;
determining included angle information between the left and right side radio frequency mechanisms and the vehicle according to the second driving image; and
determining the spacing distance between the vehicle and the obstacle according to the included angle information and the installation height information.

9. An obstacle ranging device, comprising:

an information determination module configured to determine obstacle region information of an obstacle when it is determined that the obstacle exists in a driving direction of a vehicle according to a captured first driving image;
a manner determination module configured to determine a light beam emission manner according to a current vehicle speed and the obstacle region information;
a light beam emission module configured to control left and right side radio frequency mechanisms on the vehicle to emit a light beam in the light beam emission manner;
an image obtaining module configured to adjust a light spot focusing parameter of a light beam spot in a light spot focusing manner matching the light beam emission manner and obtain a second driving image containing the adjusted light beam spot; and
a distance determination module configured to determine a spacing distance between the vehicle and the obstacle according to the second driving image;

wherein the light beam spot is a light dropping point of the light beam in an emission direction of the light beam.

10. A vehicle, comprising:

at least one controller;
a radio frequency rotation member;
a light spot focusing chip; and
a memory communicatively connected to the at least one controller;
wherein the radio frequency rotation member is connected to left and right side radio frequency mechanisms, and the radio frequency rotation member is configured to control a light beam emission manner of the left and right side radio frequency mechanisms;
the light spot focusing chip is configured to adjust a light spot focusing parameter of a light beam spot; and
the memory stores a computer program executable by the at least one controller, and the computer program, when executed by the at least one controller, enables the at least one controller to perform the obstacle ranging method according to any one of claims 1 to 8.

11. A computer-readable storage medium storing a computer instruction, wherein the computer instruction is configured to implement, when executed by a processor, the obstacle ranging method according to any one of claims 1 to 8.

S110

When it is determined, according to a captured first driving image, that an obstacle exists in a driving direction of a vehicle, determine obstacle region information of the obstacle

S120

Determine a light beam emission manner according to a current vehicle speed and the obstacle region information

S130

Control left and right side radio frequency mechanisms on the vehicle to emit a light beam in the light beam emission manner

S140

Adjust a light spot focusing parameter of a light beam spot in a light spot focusing manner matching the light beam emission manner, and obtain a second driving image containing the adjusted light beam spot

**FIG. 1**

S201

When it is determined, according to a captured first driving image, that an obstacle exists in a driving direction of a vehicle, determine obstacle region information of the obstacle

S202

Acquire a current vehicle speed of the vehicle

S203

Determine whether the current vehicle speed is greater than a preset speed threshold

Yes ← → No

S204

Use an included angle between a light beam and the vehicle being 90° as a light beam emission manner

S205

Determine a reference line corresponding to the obstacle according to the obstacle region information, and use a manner that a light spot dropping point corresponding to the light beam is located on the reference line as the light beam emission manner

S207

Control, by the radio frequency rotation member, the left and right side radio frequency mechanisms on the vehicle to emit the light beam in the light beam emission manner of the included angle between the light beam and the vehicle being 90°

S206

Control, by a radio frequency rotation member, the left and right side radio frequency mechanisms on the vehicle to emit the light beam in the light beam emission manner that the light spot dropping point corresponding to the light beam is located on the reference line

S208

When the light beam emission manner is the included angle between the light beam and the vehicle being 90°, and the light spot focusing manner is performing the spot focusing according to the obstacle region information, adjust the light spot focusing parameter of the light beam spot, and obtain the second driving image containing the adjusted light beam spot

S209

When the light beam emission manner is that the light spot dropping point corresponding to the light beam is located on the reference line, and the light spot focusing manner is performing the spot focusing by using a preset focusing parameter threshold, adjust the light spot focusing parameter of the light beam spot, and obtain the second driving image that containing the adjusted light beam spot

S210

Determine an area value of the light beam spot according to the second driving image

S212

Acquire installation height information of the left and right side radio frequency mechanisms

S211

Determine the spacing distance between the vehicle and the obstacle according to the area value

S213

Determine included angle information between the left and right side radio frequency mechanisms and the vehicle according to the second driving image

S214

Determine the spacing distance between the vehicle and the obstacle according to the included angle information and the installation height information

**FIG. 2**

First driving image

**FIG. 3**

**FIG. 4A**

**FIG. 4B**

| Information determination module | Manner determination module | Light beam emission module | Image obtaining module | Distance determination module |
|---|---|---|---|---|
| 41 | 42 | 43 | 44 | 45 |

**FIG. 5**

EP 4 397 942 A1

**FIG. 6**

EP 4 397 942 A1

## INTERNATIONAL SEARCH REPORT

| International application No. |
| --- |
| **PCT/CN2023/072290** |

| **A.** | **CLASSIFICATION OF SUBJECT MATTER** |
| --- | --- |

G01B11/14(2006.01)i; G06V20/58(2022.01)i; G01S13/93(2020.01)i

According to International Patent Classification (IPC) or to both national classification and IPC

| **B.** | **FIELDS SEARCHED** |
| --- | --- |

Minimum documentation searched (classification system followed by classification symbols)

IPC: G01B 11, G01C, G01S, G06K, G06T, G06V; CPC: G06K9/00805

Documentation searched other than minimum documentation to the extent that such documents are included in the fields searched

Electronic data base consulted during the international search (name of data base and, where practicable, search terms used)

CNABS, CNTXT, WPABSC, ENTXTC, VEN: 障碍物, 障碍, 障害, 目标, 物体, 距离, 测距, 间距, 图像, 视觉, 影像, 照片, 视频, 焦距, 聚焦, 焦点, 光斑, 斑点, 散斑, 光束, 光线, 方向, 方位, obstacle, object, distance, rang+, imag+, photo+, picture?, focus+, spot?, direction?

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | KR 20120076112 A (IACF KEIMYUNG UNIVERSITY) 09 July 2012 (2012-07-09) description, paragraphs [0023]-[0037], and figures 3-5 | 1-11 |
| A | CN 106291520 A (JIANGSU UNIVERSITY) 04 January 2017 (2017-01-04) description, paragraphs [0033]-[0048], and figures 1-5 | 1-11 |
| A | CN 110641366 A (AIWAYS AUTOMOBILES CO., LTD.) 03 January 2020 (2020-01-03) entire document | 1-11 |
| A | CN 108323190 A (AUTEL ROBOTICS CO., LTD.) 24 July 2018 (2018-07-24) entire document | 1-11 |
| A | CN 111103593 A (SHENZHEN CAMSENSE TECHNOLOGY CO., LTD.) 05 May 2020 (2020-05-05) entire document | 1-11 |
| A | CN 113869268 A (GUANGZHOU XIAOPENG AUTOPILOT TECHNOLOGY CO., LTD.) 31 December 2021 (2021-12-31) entire document | 1-11 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 August 2023** | **24 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/072290** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021251028 A1 (HITACHI LTD.) 16 December 2021 (2021-12-16)<br>entire document | 1-11 |

Form PCT/ISA/210 (second sheet) (July 2022)

**INTERNATIONAL SEARCH REPORT**
Information on patent family members

International application No.

**PCT/CN2023/072290**

| Patent document cited in search report | | | Publication date (day/month/year) | Patent family member(s) | | | Publication date (day/month/year) |
|---|---|---|---|---|---|---|---|
| KR | 20120076112 | A | 09 July 2012 | KR | 101309028 | B1 | 04 October 2013 |
| CN | 106291520 | A | 04 January 2017 | None | | | |
| CN | 110641366 | A | 03 January 2020 | None | | | |
| CN | 108323190 | A | 24 July 2018 | EP | 3591490 | A1 | 08 January 2020 |
| | | | | EP | 3591490 | A4 | 09 December 2020 |
| | | | | EP | 3591490 | B1 | 01 December 2021 |
| | | | | WO | 2019113966 | A1 | 20 June 2019 |
| | | | | US | 2019187725 | A1 | 20 June 2019 |
| | | | | US | 10860039 | B2 | 08 December 2020 |
| CN | 111103593 | A | 05 May 2020 | WO | 2021134809 | A1 | 08 July 2021 |
| CN | 113869268 | A | 31 December 2021 | None | | | |
| WO | 2021251028 | A1 | 16 December 2021 | EP | 4166416 | A1 | 19 April 2023 |
| | | | | US | 2023202540 | A1 | 29 June 2023 |
| | | | | AU | 2021289307 | A1 | 19 January 2023 |
| | | | | JP | 2021194939 | A | 27 December 2021 |

Form PCT/ISA/210 (patent family annex) (July 2022)

**REFERENCES CITED IN THE DESCRIPTION**

**Patent documents cited in the description**

- CN 202211496847